# EUROPEAN PATENT SPECIFICATION

(11) **EP 4 524 510 B1**
(45) Date of publication and mention of the grant of the patent: **20.08.2025**
(21) Application number: 23198028.5
(22) Date of filing: 18.09.2023
(51) Int. Cl.: G01B 11/06, G01B 11/24

(54) **OPTICAL SENSOR FOR THE DETECTION OF AN HEIGHT PROFILE OF AN OBJECT SURFACE**
OPTISCHER SENSOR ZUR ERFASSUNG EINES HÖHENPROFILS EINER OBJEKTOBERFLÄCHE
CAPTEUR OPTIQUE POUR LA DÉTECTION D'UN PROFIL DE HAUTEUR D'UNE SURFACE D'OBJET

(43) Date of publication of application: 19.03.2025
(73) Proprietor: SICK AG, 79183 Waldkirch (DE)
(72) Inventor: Edhammer, Jens, 58734 Linköping (SE); Murhed, Anders, 58246 Linköping (SE); Bertz, Denise, 79183 Waldkirch (DE); Bleicher, Katharina, 79312 Emmendingen (DE)
(74) Representative: Manitz Finsterwald Patent- und Rechtsanwaltspartnerschaft mbB

(56) References cited:
- JP-A- 2009 068 986
- US-B1- 6 298 152
- US-B1- 6 885 464

## Description

The present invention relates to an optical sensor for the detection of at least one height profile of an object surface in accordance with the principle of light sectioning method. The optical sensor comprises a light transmitter which is configured to project at least one light line onto the object surface, a receiving unit comprising a light receiver having an array of receiving elements and a receiving optics arranged upstream of the light receiver for generating an image of the at least one projected light onto the light receiver, and an evaluation unit connected to the light receiver and configured for determining the height profile from an image of the at least one projected light line recorded by the light receiver.

The light sectioning method is also known as light section triangulation method. Accordingly, said optical sensor can also be named as light section triangulation sensor. The light sectioning method is a 2D or 3D measuring method for a noncontact measurement of surfaces of objects. The light transmitter, a point on the object surface illuminated by a beam of the light transmitter, and the receiving unit form a triangle. The light transmitter and the receiving unit define a baseline of the triangle. Based on the relative position of the image of a light spot generated at said surface point or intersection point formed on the light receiver and the geometrical parameters of the optical sensor, including the length of the baseline or parallax, the angles between the transmission and receiving beams and the baseline, the height coordinate of said surface point can be calculated according to the principle of triangulation. Accordingly, the position of the image of the light spot on the light receiver - considered in the direction of triangulation, which is defined by said baseline of the triangle - depends on the distance of the surface point or intersection point from the light transmitter.

In order to enable the optical sensor to detect a 2D or 3D height profile of the object surface, the light transmitter is configured to project one or more light lines onto the object surface. At least one light line generally extends perpendicular to the plane spanned by said triangle.

Depending on the remitting characteristics of the object surface, an image of the light line recorded by the light receiver may additionally show artefacts. For example, if the object has a glossy surface, the image may show side lines or double lines or other reflexes besides the actual image of the light line.

From the diploma thesis "Entwicklung eines Laser-Lichtschnittsystems zur Erfassung von 3D-Geometrien", authored by Johann Sladczyk at the Technical University of Dortmund in March 2008, it is known to adapt the exposure time, the aperture and/or the amplification of the light receiver to the surface characteristics of a certain object in order to optimize the brightness of the images.

US 6 298 152 B1 discloses an image recognition system based on the principle of the light section method with a slit light source for projecting a linear light line onto the surface of a workpiece. The light line is detected with the aid of a television camera comprising a pick-up unit and a lens system having an automatic aperture adjustment mechanism for adjusting the amount of light captured according to changes in the surface property of the workpiece or the illumination intensity.

A similar system is shown in JP 2009/68986 A.

It is an object of the present invention to improve the detection accuracy of an optical sensor of the above-mentioned type.

The object is satisfied by an optical sensor having the features of claim 1. According to the invention, the receiving unit comprises a tuneable aperture associated with the receiving optics and configured for varying the size and/or the shape of the aperture of the receiving optics, wherein the evaluation unit is configured for controlling the tuneable aperture in dependence from at least one image parameter of the image of the at least one projected light line, wherein the at least one image parameter comprises the presence of an image artefact to be compensated which includes unwanted side peaks or side lines in the image, or multiple reflections and ghost images of the projected line.

As already mentioned above, the light transmitter and the receiving unit are arranged in a triangulation configuration. In other words, the light transmitter and the receiving unit are arranged with respect to one another such that the position of a respective segment of the image of the projected light line on the light receiver in a direction of triangulation results in dependence of the respective height of the object surface at a location corresponding to said segment, i.e. corresponding to the height of the location wherefrom the light forming said segment in the image is emitted.

Typically, the measured height of a respective surface point of the object surface is a relative height and can be defined as the distance of the surface point from a pre-defined reference plane. The arrangement of the light transmitter and the receiving unit in a triangulation configuration can also be described by a geometry in which a transmission axis along which light forming the light line spreads out and a receiving axis of the reception optics are inclined to each other. The direction of triangulation extends within the plane of inclination, i.e. the plane spanned by said axes, and is parallel to the baseline extending between the light transmitter and the receiving unit. Typically, at least one of the transmission axis and the reception axis is inclined to the reference plane wherein usually only the reception axis is inclined to the reference plane and the transmission axis is perpendicular to the reference plane. The light transmitter may project the light line directly by generating a line-type projection of a light source, e.g. by the use of linear light sources, cylindrical transmission optics and/or slit apertures, or by scanning a light spot over the object surface.

In order to achieve three-dimensional information or three-dimensional height profiles of the object surface, the light transmitter may be configured to generate more than one light line, e.g. by providing the light transmitter with several light sources and assigned transmission optics or by shifting a single light line over the object surface in a direction perpendicular to the light line or by the movement of the object.

The use of a tuneable aperture allows varying the aperture size of the receiving optics in dependence of at least one image parameter. In particular, this adaption of the aperture of the receiving optics allows the depth of field to be changed as a function of one or more image parameters during operation of the optical sensor. Mainly, this feature enables the optical sensor to improve the detection accuracy even when the surface properties of the objects to be tested vary over time. For example, if reflective remission effects on glossy object surfaces generate unwanted side peaks or side lines in the image, the depth of field may be adapted in a way that these unwanted side peaks are blurred out.

In accordance with a preferred embodiment of the optical sensor, the at least one image parameter further comprises the depth of field, the sharpness, the brightness and/or the level of noise in the recorded image. Said image parameters can be determined by well-known methods of image analysis including edge detection, segmentation and Fourier analysis. The presence of an image artefact may include the presence of side peaks or side lines or multiple peaks as mentioned above.

In accordance with another preferred embodiment, the evaluation unit is configured for controlling the tuneable aperture based on an optimization algorithm which determines a respective optimum set point for the size and/or the shape of the aperture of the receiving optics for which the at least one image parameter converges to a respective pre-determined optimum value. The algorithm can be based on model functions, look-up tables or on kind of a control loop which is described in more detail below.

After the optimum set point for the size and/or the shape of the aperture is found, the evaluation unit may set the size and/or the shape of the tuneable aperture to the determined set point and detect the height profile operating the receiving unit with a tuneable aperture being set to this set point.

In accordance with another preferred embodiment, the optimization algorithm determines the optimum set point for the size and/or the shape of the aperture by an iteration process having a plurality of iteration steps wherein in each iteration step a different set point for the size and/or the shape of the tuneable aperture is set, a corresponding image is recorded for this set point, and the at least one image parameter of this image is determined. For example, over the iteration steps the aperture size can be swept or tuned over a certain range of sizes, e.g. between a minimum and a maximum size. The set point for the size and/or the shape of the aperture may be varied by pre-determined increments. The respective image parameters determined in several iteration steps can be evaluated and/or compared in order to identify the set point for which an optimum of the respective image parameter is found. This iteration process or control loop can be performed not only as a kind of preceding calibration process but also permanently during the operation of the optical sensor. For example, if a deterioration of one or more image parameters is detected, the set point for the size and/or shape of the tuneable aperture can be altered, preferably in small increments, until the deteriorated image parameter returns to the desired pre-determined optimum value.

In accordance with another preferred embodiment, the evaluation unit is configured for controlling the tuneable aperture in dependence from the plurality of image parameters, and wherein the optimization algorithm determines the optimum set point for which an optimum approximation of the image parameters to their respective optimum values is achieved. This embodiment considers that a certain set point for the aperture size or shape will not result in an optimum value for all image parameters. In this case the optimization algorithm finds the best compromise for those image parameters which are considered for the optimization process. The optimum set point can be determined for a specific object to be tested and may vary for different object types.

In accordance with another preferred embodiment, the tuneable aperture is a tuneable liquid aperture or a motorized iris aperture. A tuneable liquid aperture may be compared with the iris of a human eye. It comprises a liquid-crystal elastomer which may have integrated polyimide-based platinum heaters in order to thermally activate the liquid crystal elastomer material. A radial contraction direction, similar to a mammalian iris, can be imprinted to the liquid crystal elastomer by a custom-designed magnetic field. The actuation of such a tuneable liquid aperture is reproduceable over multiple cycles and controllable at intermediate contraction states. The motorized iris aperture may consist of several pivotable segments which together typically result in an almost round shape. By controlling the segments individually in a non-synchronic manner, not only the size but also the shape of the aperture can be modified.

In accordance with another preferred embodiment, the tuneable aperture has a rectangular shape having a long side and a short side. By using a rectangular, non-quadratic aperture, an increased depth of field in the direction of the light line and at the same time a shallow depth of field perpendicular to the light line can be realized.

In accordance with another preferred embodiment, the ratio between the long side and the short side is adjustable, in particular in dependence from specific characteristics of the object under test.

Further advantages of the optical sensor according to the invention and preferred embodiments result from the following description of the drawings. The drawings show examples of embodiments of the invention. The drawings, the description and the claims contain numerous features in combination. A person skilled in the art will experientially consider these features individually and combine them to form further useful combinations.

The invention will be described in the following with reference to embodiments and to the enclosed drawings. In this respect, the figures are to be understood schematically and not to scale. There are shown:
- Fig. 1:: a schematic side view of an optical sensor in accordance with a first embodiment; and
- Fig. 2:: a schematic side view of an optical sensor in accordance with a second embodiment.

In the following, the same reference numerals are used for identic or similar components of the various embodiments.

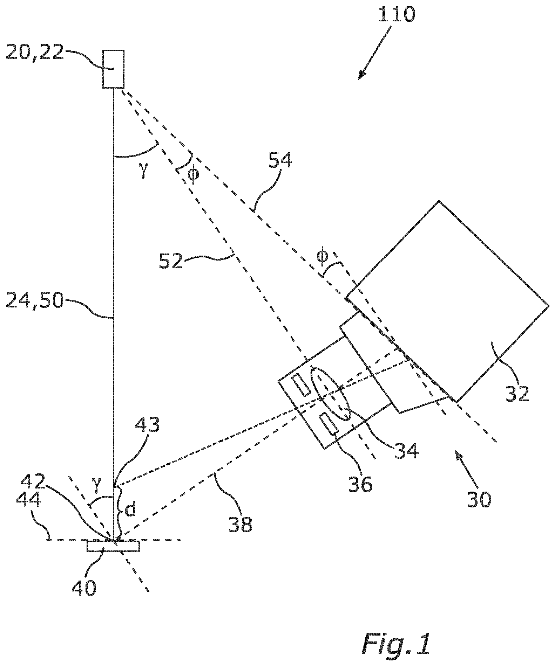

Fig. 1 shows a first embodiment of an optical sensor 110 which is designed according to the light sectioning triangulation principle. The optical sensor 110 comprises a light transmitter 20 having a light source 22, e.g. a laser, and optionally a transmission optics (not shown). The light transmitter 20 emits light along a transmission axis 24 in that the light line is projected onto the surface of an object 40 to be tested. The light line extends perpendicular to the drawing plane and intersects the drawing plane in a surface point 42.

The optical sensor 110 further comprises a receiving unit 30 comprising a light receiver 32 having an array of receiving elements being arranged in rows and columns and a receiving optics 34 arranged upstream of the light receiver 32. The light receiver 32 converts received light signals into electrical signals which are transmitted to an evaluation unit (not shown).

The receiving unit 32 further comprises a tuneable aperture 36 associated with the receiving optics 34 and configured for varying the size and/or the shape of the aperture of the receiving optics 34. It is noted that the term "aperture" refers to both, the tunable aperture itself (identified here by item 36) as well as the opening defined by this tuneable aperture 36 which defines the effective aperture of the receiving optics 34. The tuneable aperture 36 may be a tuneable liquid aperture based on a liquid crystal elastomer or a motorized iris aperture. The tuneable aperture 36 is likewise connected to the evaluation unit which is configured for controlling the tuneable aperture 36 in dependence from at least one image parameter of the image of the projected light line.

In Fig. 1, a reference plane 44 is shown defined by the main extension of the surface. Transmission light which is remitted in the surface point 42 and captured by the reception optics 34 forms a cone of light along a receiving axis 38 which is the optical axis of the receiving optics 34. The light line is represented here by the point 42 (The light line extending perpendicular to the drawing plane and intersecting the drawing plane in the surface point 42) is focussed by the receiving optics 34 onto the light receiver 32 as an image of the light line which is represented by the intersection of the receiving axis 38 and an image plane 54 defined by the light-sensitive surface of the light receiver 32. Assuming that - due to a height profile of the object surface - the transmission light would hit the object 40 at a point 43 closer to the light transmitter 20 and thus distanced from the particular surface point 42 shown, the image point would be shifted in the image plane 54 according to the principle of triangulation. The corresponding optical axis of an associated cone of remitted light captured by the reception optics 34 is indicated by the dotted line. It is noted that the distance d between the surface points 42, 43 remitting the light along the dashed line and the light remitted along the dotted line in the figures is shown not to scale in order to ease representation in the figures. Both points 42, 43 are to be understood to be located on the (profiled) surface of the object 40 at different heights above the reference plane 44.

The light transmitter 20, the light receiver 32 and the receiving optics 34 are arranged and oriented according to the Scheimpflug condition. Accordingly, an object plane 50, which is defined by the transmission axis 24, a receiving optics plane 52 defined by the optical main plane of the receiving optics 34, and the image plane 54 extend perpendicular to the drawing plane and intersect each other in a line which intersects the drawing plane nearby the transmitter 20. This Scheimpflug configuration ensures that the light line is always in focus on the light receiver 32.

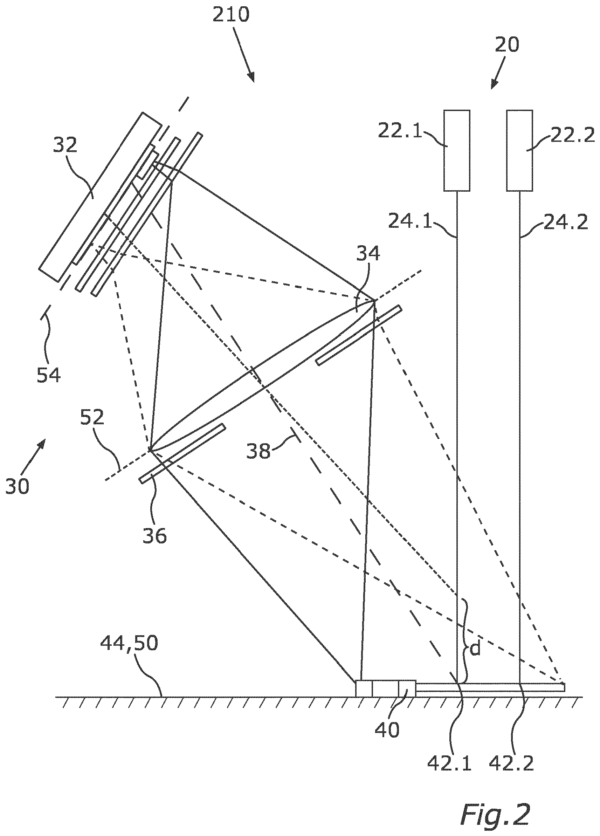

With reference to Fig. 2 an optical sensor 210 according to a second embodiment is described. Since the optical sensor 210 of Fig. 2 is configured in a similar manner as the optical sensor 110 of Fig. 1, only the main differences are described.

The optical sensor 210 comprises a light transmitter 20 comprising two light sources 22.1, 22.2 which are spaced apart and configured to project two parallel light lines onto the surface of the object 40. The beam bundles emitted from the light sources 22.1, 22.2 spread along parallel transmission axes 24.1, 24.2 and hit the surface of the object 40 in parallel light lines which perpendicularily intersect the drawing plane in surface points 42.1, 42.2.

It is understood that increasing the number of distinct light lines projected onto the object surface enables the optical sensor 210 to determine a three-dimensional height profile of the object 40 instead of a two-dimensional line profile which can be determined by the optical sensor 110 of Fig. 1.

The principle of triangulation is illustrated in Fig. 2 for the optical sensor 210 by the two different dotted lines which indicate the optical axes of the corresponding cones of remitted light captured by the reception optics 34 for surface points having different distances from the reference plane 44.

The components of the optical sensor 210 are likewise arranged in Scheimpflug configuration wherein the object plane 50 does not fall together with the transmission axis 24 as for the optical sensor 110 of Fig. 1, but with the reference plane 44. This configuration ensures here that all surface points 41.1, 42.2 lying in the reference plane 44 will be imaged on the light receiver 32 in focus.

The tuneable apertures 36 of the optical sensors 110, 210 allow adapting at least the depth of field for the images of the projected light lines during the operation of the optical sensor 110, 210.

This can be used, for example, for a continuous observation of objects of different type being transported on a conveyor. Depending on the reflection or remitting characteristics of the object surfaces, possible image artefacts as multiple reflections or ghost images of the projected line can be compensated by varying the aperture size and/or the aperture shape. If multiple peaks or lines will occur in the recorded image, a modification of the depth of field can be used to add blur to those peaks which are generated by remission artefacts. This selective blurring of artificial peaks allows the evaluation unit in a subsequent analysation step to distinguish the correct sharp peaks or lines from the blurred artificial or erratic peaks or lines. The process of adapting the size and/or shape of the aperture by controlling the tuneable aperture 36 accordingly can be performed in a continuous manner.

### Reference numeral list

- 110, 210: optical sensor
- 20: light transmitter
- 22, 22.1, 22.2: light source
- 24, 24.1, 24.2: transmission axis
- 30: receiving unit
- 32: light receiver
- 34: receiving optics
- 36: tuneable aperture
- 38: receiving axis
- 40: object
- 42, 42.1, 42.2, 43: surface point
- 44: reference plane
- 50: object plane
- 52: receiving optics plane
- 54: image plane

## Claims

1. An optical sensor (110, 210) for the detection of at least one height profile of an object surface in accordance with the principle of light sectioning method, the optical sensor (110, 210) comprising:
a light transmitter (20) which is configured to project at least one light line onto the object surface;
a receiving unit (30) comprising a light receiver (32) having an array of receiving elements and a receiving optics (34) arranged upstream of the light receiver (32) for generating an image of the at least one projected light line on the light receiver (32); and
an evaluation unit connected to the light receiver (32) and configured for determining the height profile from an image of the at least one projected light line recorded by the light receiver (32);
wherein the receiving unit (30) further comprises a tunable aperture (36) associated with the receiving optics (34) and configured for varying the size and/or the shape of the aperture of the receiving optics (34),
wherein the evaluation unit is configured for controlling the tunable aperture (36) in dependence from at least one image parameter of the image of the at least one projected light line,
**characterized in that**,
the at least one image parameter comprises the presence of an image artefact to be compensated which includes unwanted side peaks or side lines in the image, or multiple reflections and ghost images of the projected line.

2. The optical sensor (110, 210) in accordance with claim 1,
wherein the at least one image parameter further comprises the depth of field, the sharpness, the brightness, and/or the level of noise in the recorded image.

3. The optical sensor (110, 210) in accordance with claim 1 or 2,
wherein the evaluation unit is configured for controlling the tunable aperture (36) based on an optimization algorithm which determines a respective optimum set point for the size and/or the shape of the aperture of the receiving optics (34) for which the at least one image parameter converges to a respective predetermined optimum value.

4. The optical sensor (110, 210) in accordance with claim 3,
wherein the optimization algorithm determines the optimum set point for the size and/or the shape of the aperture by an iteration process having a plurality of iteration steps wherein in each iteration step a different set point for the size and/or the shape of the aperture is set, a corresponding image is recorded for this set point, and the at least one image parameter of this image is determined.

5. The optical sensor (110, 210) in accordance with claim 3 or 4,
wherein the evaluation unit is configured for controlling the tunable aperture (36) in dependence from a plurality of image parameters, and wherein the optimization algorithm determines the optimum set point for which an optimum approximation of the image parameters to their respective optimum values is achieved.

6. The optical sensor (110, 210) in accordance with any one of the preceding claims,
wherein the tunable aperture (36) is a tunable liquid aperture or a motorized iris aperture.

7. The optical sensor (110, 210) in accordance with any one of the preceding claims,
wherein the tunable aperture (36) has a rectangular shape having a long side and a short side.

8. The optical sensor (110, 210) in accordance with claim 7,
wherein the long side extends in a direction perpendicular to the light line.

9. The optical sensor (110, 210) in accordance with claim 7 or 8,
wherein the ratio between the long side and the short side is adjustable.

## Patentansprüche

1. Optischer Sensor (110, 210) zur Erfassung mindestens eines Höhenprofils einer Objektoberfläche nach dem Prinzip des Lichtschnittverfahrens, wobei der optische Sensor (110, 210) umfasst:
einen Lichtsender (20), der dazu eingerichtet ist, mindestens eine Lichtlinie auf die Objektoberfläche zu projizieren;
eine Empfangseinheit (30), die einen Lichtempfänger (32) mit einem Array von Empfangselementen und eine dem Lichtempfänger (32) vorgeordnete Empfangsoptik (34) zur Erzeugung eines Bildes der mindestens einen projizierten Lichtlinie auf dem Lichtempfänger (32) umfasst; und
eine mit dem Lichtempfänger (32) verbundene Auswerteeinheit, die dazu eingerichtet ist, das Höhenprofil aus einem von dem Lichtempfänger (32) aufgenommenen Bild der mindestens einen projizierten Lichtlinie zu bestimmen;
wobei die Empfangseinheit (30) ferner eine der Empfangsoptik (34) zugeordnete abstimmbare Apertur (36) umfasst, die dazu eingerichtet ist, die Größe und/oder die Form der Apertur der Empfangsoptik (34) zu variieren,
wobei die Auswerteeinheit dazu eingerichtet ist, die abstimmbare Apertur (36) in Abhängigkeit von mindestens einem Bildparameter des Bildes der mindestens einen projizierten Lichtlinie zu steuern,
**dadurch gekennzeichnet, dass**
der mindestens eine Bildparameter das Vorhandensein eines zu kompensierenden Bildartefakts umfasst, das unerwünschte Seitenspitzen oder Seitenlinien im Bild oder Mehrfachreflexionen und Geisterbilder der projizierten Linie umfasst.

2. Optischer Sensor (110, 210) nach Anspruch 1,
wobei der mindestens eine Bildparameter ferner die Tiefenschärfe, die Schärfe, die Helligkeit und/oder den Rauschpegel im aufgenommenen Bild umfasst.

3. Optischer Sensor (110, 210) nach einem der Ansprüche 1 oder 2,
wobei die Auswerteeinheit dazu eingerichtet ist, die abstimmbare Apertur (36) basierend auf einem Optimierungsalgorithmus zu steuern, der einen jeweiligen optimalen Sollwert für die Größe und/oder die Form der Apertur der Empfangsoptik (34) bestimmt, für den der mindestens eine Bildparameter auf einen jeweiligen vorbestimmten Optimalwert konvergiert.

4. Optischer Sensor (110, 210) nach Anspruch 3,
wobei der Optimierungsalgorithmus den optimalen Sollwert für die Größe und/oder die Form der Apertur durch einen Iterationsprozess mit mehreren Iterationsschritten bestimmt, wobei in jedem Iterationsschritt ein anderer Sollwert für die Größe und/oder die Form der Apertur eingestellt wird, ein entsprechendes Bild für diesen Sollwert aufgenommen wird und der mindestens eine Bildparameter dieses Bildes bestimmt wird.

5. Optischer Sensor (110, 210) nach einem der Ansprüche 3 oder 4,
wobei die Auswerteeinheit dazu eingerichtet ist, die abstimmbare Apertur (36) in Abhängigkeit von mehreren Bildparametern zu steuern, und wobei der Optimierungsalgorithmus den optimalen Sollwert bestimmt, für den eine optimale Annäherung der Bildparameter an ihre jeweiligen Optimalwerte erreicht wird.

6. Optischer Sensor (110, 210) nach einem der vorhergehenden Ansprüche, wobei die abstimmbare Apertur (36) eine abstimmbare Flüssigkeitsapertur oder eine motorisierte Irisblende ist.

7. Optischer Sensor (110, 210) nach einem der vorhergehenden Ansprüche, wobei die abstimmbare Apertur (36) eine rechteckige Form mit einer langen Seite und einer kurzen Seite aufweist.

8. Optischer Sensor (110, 210) nach Anspruch 7,
wobei sich die lange Seite in einer Richtung senkrecht zur Lichtlinie erstreckt.

9. Optischer Sensor (110, 210) nach einem der Ansprüche 7 oder 8,
wobei das Verhältnis zwischen der langen Seite und der kurzen Seite einstellbar ist.

## Revendications

1. Capteur optique (110, 210) destiné à détecter au moins un profil de hauteur d'une surface d'objet selon le principe de la méthode de sectionnement par lumière, le capteur optique (110, 210) comprenant :
un émetteur de lumière (20) qui est configuré pour projeter au moins une ligne de lumière jusque sur la surface d'objet ;
une unité de réception (30) comprenant un récepteur de lumière (32) ayant un réseau d'éléments de réception et un élément optique de réception (34) agencé en amont du récepteur de lumière (32) pour générer une image de ladite au moins une ligne de lumière projetée sur le récepteur de lumière (32) ; et
une unité d'évaluation connectée au récepteur de lumière (32) et configurée pour déterminer le profil de hauteur à partir d'une image de ladite au moins une ligne de lumière projetée enregistrée par le récepteur de lumière (32) ;
dans lequel l'unité de réception (30) comprend au moins une aperture adaptable (36) associée à l'élément optique récepteur (34) et configurée pour faire varier la taille et/ou la forme de l'aperture de l'élément optique récepteur (34),
dans lequel l'unité d'évaluation est configurée pour commander l'aperture adaptable (36) en dépendance d'au moins un paramètre d'image de l'image de ladite au moins une ligne de lumière projetée,
**caractérisé en ce que**
ledit au moins un paramètre d'image comprend la présence d'un artefact d'image à compenser qui inclut des pics latéraux ou des lignes latérales indésirables dans l'image, ou de multiples réflexions et images fantômes de la ligne projetée.

2. Capteur optique (110, 210) selon la revendication 1,
dans lequel ledit au moins un paramètre d'image comprend en outre la profondeur de champ, la netteté, la luminosité et/ou le niveau de bruit dans l'image enregistrée.

3. Capteur optique (110, 210) selon la revendication 1 ou 2,
dans lequel l'unité d'évaluation est configurée pour commander l'aperture adaptable (36) sur la base d'un algorithme d'optimisation qui détermine un point de consigne optimum respectif pour la taille et/ou la forme de l'aperture de l'élément optique récepteur (34) pour lequel ledit au moins un paramètre d'image converge vers une valeur optimum prédéterminée respective.

4. Capteur optique (110, 210) selon la revendication 3,
dans lequel l'algorithme d'optimisation détermine le point de consigne optimum pour la taille et/ou la forme de l'aperture par le biais d'un processus d'itération ayant une pluralité d'étapes d'itération, dans lequel, dans chaque étape d'itération, un point de consigne différent pour la taille et/ou la forme de l'aperture est fixé, une image correspondante est enregistrée pour ce point de consigne, et ledit au moins un paramètre d'image de cette image est déterminé.

5. Capteur optique (110, 210) selon la revendication 3 ou 4,
dans lequel l'unité d'évaluation est configurée pour commander l'aperture adaptable (36) en dépendance d'une pluralité de paramètres d'image, et dans lequel l'algorithme d'optimisation détermine le point de consigne optimum pour lequel une approximation optimum des paramètres d'image vers leur valeurs optimum respectives est réalisée.

6. Capteur optique (110, 210) selon l'une quelconque des revendications précédentes,
dans lequel l'aperture adaptable (36) est une aperture à liquide adaptable ou une aperture à iris motorisée.

7. Capteur optique (110, 210) selon l'une quelconque des revendications précédentes,
dans lequel l'aperture adaptable (36) a une forme rectangulaire ayant un côté long et un côté court.

8. Capteur optique (110, 210) selon la revendication 7,
dans lequel le côté long s'étend dans une direction perpendiculaire à la ligne de lumière.

9. Capteur optique (110, 210) selon la revendication 7 ou 8,
dans lequel le rapport entre le côté long et le côté court est ajustable.
